# EUROPÄISCHE PATENTSCHRIFT

(11) **EP 1 943 735 B1**
(45) Veröffentlichungstag und Bekanntmachung des Hinweises auf die Patenterteilung: **07.09.2016**
(21) Anmeldenummer: 06776341.7
(22) Anmeldetag: 21.07.2006
(51) Int. Cl.: H03K 17/97, G01B 7/30, G01D 5/14

(54) **BEDIENELEMENT FÜR EIN KRAFTFAHRZEUG**
OPERATING ELEMENT FOR A MOTOR VEHICLE
ELEMENT DE COMMANDE POUR VEHICULE AUTOMOBILE

(30) Priorität: 21.07.2005 DE 102005033983
(43) Veröffentlichungstag der Anmeldung: 16.07.2008
(73) Patentinhaber: Preh GmbH, 97616 Bad Neustadt a.d. Saale (DE); Zegula, Oliver, 97616 Bad Neustadt (DE)
(72) Erfinder: ZEGULA, Oliver, 97616 Bad Neustadt (DE)
(74) Vertreter: Lohmanns, Bernard
(86) Internationale Anmeldenummer: PCT/EP2006/007220
(87) Internationale Veröffentlichungsnummer: WO 2007/009813

(56) Entgegenhaltungen:
- DE-A1- 10 126 077
- DE-B3- 10 360 016
- DE-U1- 8 130 371
- US-A- 4 054 860
- US-B1- 6 188 332

## Beschreibung

Die Erfindung betrifft ein Bedienelement für ein Kraftfahrzeug, insbesondere einen Drehsteller, nach dem Oberbegriff des Patentanspruchs 1.

Ein derartiges Bedienelement für ein Kraftfahrzeug ist aus der DE 81 30 371 U1 bekannt.

Um die Drehbewegungen an einem Drehsteller in einem Kraftfahrzeug zu ermitteln, sind verschiedenste Systeme bekannt. So ist in der DE 103 04 804 A1 ein elektrischer Schalter, insbesondere in der Art eines Joystick oder Cursorschalters, beschrieben, der auch mit Mitteln zur Erkennung einer Drehung eines Betätigungselementes des elektrischen Schalters versehen ist. An das drehbar gelagerte Betätigungselement ist eine Verlängerung angeformt an deren Ende Zahnelemente, in Form der Zinnen der Burg, angeformt sind. Die Zahnelemente wirken hierbei mit zwei Lichtschranken zusammen, deren Licht durch die Zahnelemente beim Drehen des Betätigungselementes unterbrochen wird, so dass die Bewegung erfassbar ist. Die zwei Lichtschranken sind derart angeordnet, dass die jeweilige Drehrichtung des Betätigungselementes erkennbar wird. Der Beschreibung ist zu entnehmen, dass auch sonstige, sensorisch arbeitende Schaltelemente wie Hall-Sensoren verwendet werden können.

Die Verwendung von Hall-Sensoren zur Erkennung einer Bewegung in einem Schalter ist in der DE 94 15 257 U1 beschrieben. An einem Schlosszylinder ist ein ferromagnetisches Objekt befestigt, dass sich mittig oberhalb zweier Hall-Generatoren befindet. Wird nun am Schlosszylinder gedreht, dann wird ein Auslöseteil in eine außermittige Position gegenüber einem Hall-Differenz-IC bewegt. In dieser Position wird eine Magnetflussdifferenz zwischen den beiden Hall-Generatoren wahrgenommen. Davon abhängig, ob der Auslöseteil außermittig links oder rechts steht, ist die Magnetflussdifferenz positiv oder negativ. Beschrieben ist somit der Einsatz von Hall-Generatoren in Kombination mit einem ferromagnetischen Objekt und einem Dauermagneten.

In der DE 20 2005 019 271 U1 ist die Verwendung von Hall-Sensorelementen zur Erkennung einer Bewegung in einem mehrstufigen kontaktlosen Schalter, insbesondere für ein Bedienelement in einem Kraftfahrzeug beschrieben. Ein zweipoliger Permanentmagnet ist um seine Mittelachse verdreht zu einer Sensorachse, auf der Hall-Sensoren befestigt sind, angeordnet. Mittels einer Bewegung des Permanentmagneten in Bezug auf die Sensorachse ändert sich das mittels der Hall-Sensoren erfassbare Magnetfeld, so dass ein Schaltvorgang detektierbar ist.

Die Aufgabe der Erfindung besteht darin, ein Bedienelement bereitzustellen, dass einerseits die Erkennung der Drehbewegung ermöglicht und andererseits resistent gegen Verschmutzungen, insbesondere Staub, ist. Darüber hinaus soll das Bedienelement konstruktiv einfach aufgebaut, leichtgängig und kostengünstig herstellbar sein.

Die Aufgabe der Erfindung wird gelöst durch die Merkmale des Patentanspruchs 1.

Durch den erfindungsgemäßen Aufbau des Bedienelementes ist nun die Möglichkeit geschaffen ein gegen Verschmutzung resistentes Bedienelement bereitzustellen. Die in die Verlängerung des Bedienknopfs eingeformten Magnete arbeiten mit vorzugsweise als Hall-Sensoren ausgebildeten Sensoren zusammen, die unabhängig von Staub und Schmutz eine Erkennung der Drehbewegung ermöglichen. Werden nun die, die magnetische Feldlinien der Magnete erfassenden Sensoren derart unterhalb des Bedienknopfs angeordnet, dass bei jeder Drehbewegung eine andere Schaltstellung detektierbar ist, so ist gleichzeitig eine Richtungserkennung der Drehbewegung möglich. Der konstruktiv einfache Aufbau ergibt sich dadurch, dass die an den Bedienknopf angeformte Verlängerung, in der die Dauermagnete enthalten sind, an die Verlängerung einstückig angeformt ist. In einer weiteren vorteilhaften Ausführungsform ist vorgeschlagen, den Bedienknopf in seiner Aufnahme mittels eines herkömmlichen, standardisierten Lagers zu lagern, so dass einerseits eine Leichtgängigkeit gewährleistet wird und durch die Verwendung der standardisierten Bauteile das Bedienelement kostengünstig herzustellen ist.

Nachfolgend wird die Erfindung anhand eines prinzipiell dargestellten Ausführungsbeispiels sowie anhand von Detailskizzen und Diagrammen erläutert.

### Es zeigt

- Figur 1: einen erfindungsgemäßen Drehsteller in der Seitenansicht, die teilweise geschnitten ist,
- Figur 2: eine prinzipielle Ansicht aus Richtung des Pfeils II aus Figur 1,
- Figur 3: eine Anordnung der Magnete in der Verlängerung des Bedienknopfs,
- Figur 4: den Verlauf der mittels der Sensoren ermittelten Schaltzustände in Abhängigkeit vom Drehwinkel des Bedienknopfes und
- Figur 5: den realen Verlauf der mittels Versuchen gemessenen Feldstärken und deren Verlauf über den Drehwinkel.

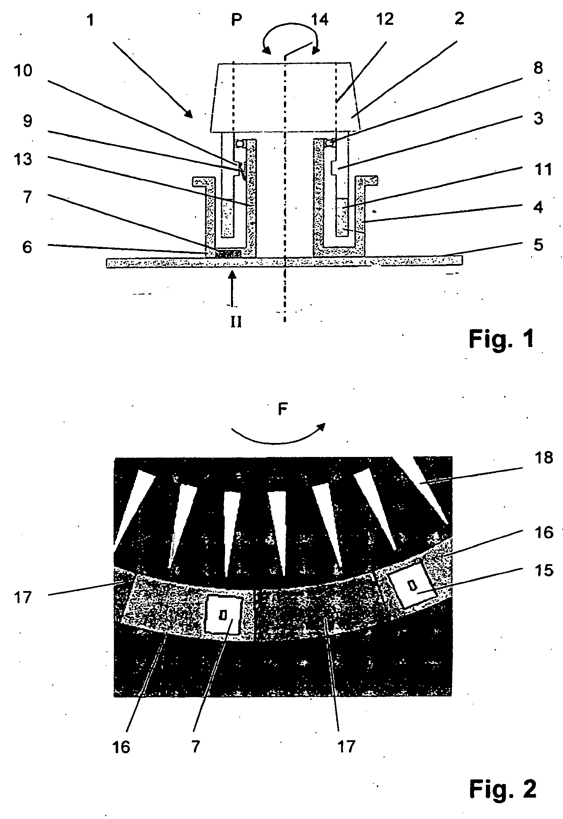

In der Figur 1 ist ein erfindungsgemäß ausgestattetes Bedienelement 1 in der Seitenansicht in einer teilweisen geschnittenen Ansicht dargestellt. Das Bedienelement besteht hierbei aus einem Bedienknopf 2, einer an den Bedienknopf 2 angeformten Verlängerung 3 einer drehfest im Bedienelement 1 angeordneten Aufnahme 4 für den Bedienknopf 2, wobei die Aufnahme auf einer Leiterplatte 5 befestigt ist. In einer Ausnehmung 6 der Aufnahme 4 ist ein, die magnetischen Feldlinien der Magnete erfassender Sensor 7, der in diesem Ausführungsbeispiel ein Hall-Sensor ist, auf der Leiterplatte 5 befestigt. Der Bedienknopf 2 ist mittels eines Lagers 8 in der Aufnahme 4 gelagert. Am Bedienknopf 2 ist gleichzeitig eine Rastkontur 9 angeformt, die mit einem die Rastkraft erzeugenden Federelement 10 zusammenwirkt. Selbstverständlich sind Rastkontur 9 und Rastfeder 10 auch umgekehrt im Bedienelement befestigt oder ausbildbar. Am unteren Ende der Verlängerung 3 ist ein Bereich 11 angeformt oder auf jeden Fall verdrehfest befestigt, in dem die Magnete enthalten sind. Die Verlängerung 3, sowie die Aufnahme 4 sind im Schnitt dargestellt, wohingegen der Bedienknopf 2 von seiner Seite her dargestellt ist, so dass die für einen Bediener erfassbare Grifffläche 2 erkennbar ist. Die Grifffläche 2 ist selbstverständlich auch mehrteilig, zum Beispiel aus einer metallischen oder metallischen Zweikomponenten-Kunststoff und einer gummielastischen Oberfläche herstellbar. Wie durch die gestrichelten Linien 12 angedeutet, ist sowohl der Bedienknopf 2 wie auch die Aufnahme 4 hohl ausgebildet, so dass der innere Teil 13, wie auch die Verlängerung 3 hohlzylinderförmige Bauteile 3, 13 bilden.

Wird nun der Bedienknopf 2 um seine Mittelachse 14 herum in Richtung des Pfeils P bewegt so kommt es zu einer Relativbewegung zwischen dem Bedienknopf 2 und der fest im Bedienelement 1 gehaltenen Aufnahme 4. Hierdurch wird gleichzeitig über die Rastkontur 4 und die Rastfeder 10 eine frei wählbare Rast erzeugt, wobei die Drehbewegung über das Lager 8 erfolgt. Der mit den Magneten versehene Teil 11 der Verlängerung 3 bewegt sich hierbei über die Hall-Sensoren 7, wobei bevorzugt zwei Hall-Sensoren 7, 15 eingesetzt werden, wie auch aus der Figur 2 ersichtlich. Vorzugsweise sind über den Umfang verteilt jeweils zwei Rasten einem magnetisierten Bereich 16 oder 17 zugewiesen.

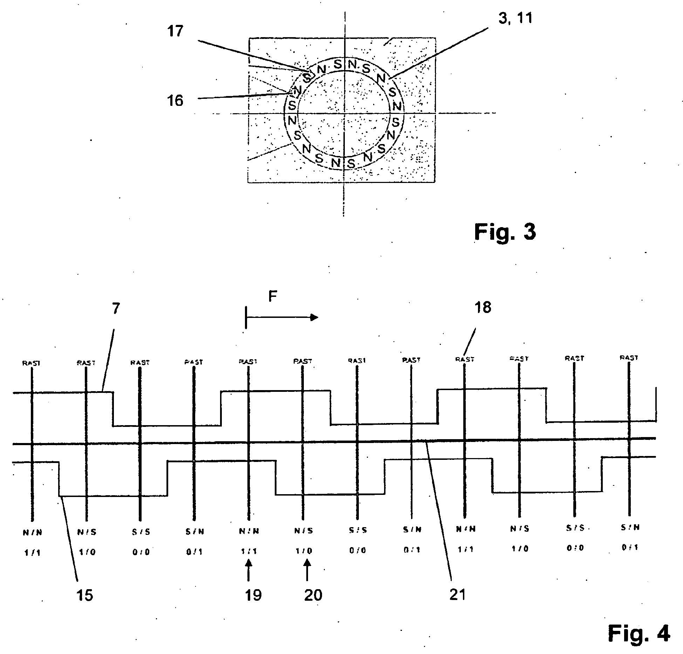

Zur näheren Erklärung der Funktionsweise der Richtungserkennung sowie der Detektion der Schaltstellung wird im weiteren das Zusammenspiel zwischen den Hall-Sensoren 7, 15 und den gegensinnig gepolten Magneten 16, 17 beschrieben. In der Figur 2 ist eine prinzipielle Ansicht aus Richtung des Pfeils II der Figur 1 wiedergegeben. Zu erkennen sind die Hall-Sensoren 7, 15 sowie ein Abschnitt aus der Verlängerung 3, 11 des Bedienknopfes 2. Mit den Pfeilen 18 sind die Position der Rasten, das heißt der einzelnen Rastpositionen beim Drehen eingezeichnet. Die Dauermagnete 16, 17 sind nebeneinander in der Verlängerung 3, 11 mit unterschiedlichen Polungen angeordnet. So ist es beispielsweise vorstellbar den helleren Bereich 16 mit einem positiven und den dunkleren Bereich 17 mit einem negativen Pol zu versehen. Wichtig ist hierbei, dass die Hall-Sensoren 7, 15 durch die unterschiedliche Polarität eine Magnetflussdifferenz in positive oder negative Richtung detektieren können, um somit eine Auswertung der Drehrichtung sowie der Drehbewegung zu ermöglichen. Wird nun die positive Magnetisierung des Magneten 16 mit Nord bezeichnet, so ist die negative Polung des Magneten 17 mit Süd bezeichenbar. Eine vollständige Anordnung der Magnete 16, 17 mit ihren Nord- und Südpolen ist in der Figur 3 wiedergegeben. Vorteilhaft ist hierbei insbesondere, wie in der Figur 3, dargestellt, dass die Magnete die Bereiche 16, 17 nicht vollständig ausfüllen, sondern das es auch ausreicht, wenn der mit den Magneten versehene Bereich 11 nur teilweise mit Magneten 16, 17 versehen ist. Wesentlich ist aber die alternierende Polarität.

Einen Verlauf der detektierten Schaltzustände der Hall-Sensoren 7, 15 als Funktion des Drehwinkels und der einzelnen Rastpositionen 18 ist in Figur 4 wiedergegeben. Ausgehend von der in der Figur 2 dargestellten Position 19, die dadurch gekennzeichnet ist, dass beide Hall-Sensoren über einen Nordpol 16 stehen, wird in einer nachgeordneten Schaltung jeweils eine 1 als Nordpol 16 ermittelt, so dass sich der Schaltzustand 1/1 ergibt. Wird nun der Bedienknopf 2 in Richtung des Pfeils F bewegt, so ändert sich die Polarität über dem Hall-Sensor 15 von Nord 16 auf Süd 17 und somit von Plus auf Minus. Dies entspricht der Schaltstellung 20 aus der Figur 4, in der der Schaltzustand 1/0 detektierbar ist. Durch eine derartige Anordnung der Hall-Sensoren 7, 15 in Bezug auf die Permanentmagnete 16, 17 ist eine Drehrichtungserkennung ermöglicht. Wie beispielhaft dargestellt, zeigt die Figur 4 den Verlauf der Schaltzustände der Hall-Sensoren 7, 15, wobei die Änderung der Feldlinienstärke der Permanentmagnete mittels der Hall-Sensoren 7, 15 ermittelt wird. In der Figur 4 sind die Schaltzustände 19, 20 über den Drehwinkel 21, wobei der Drehwinkel die Ordinate des Diagramms bildet.

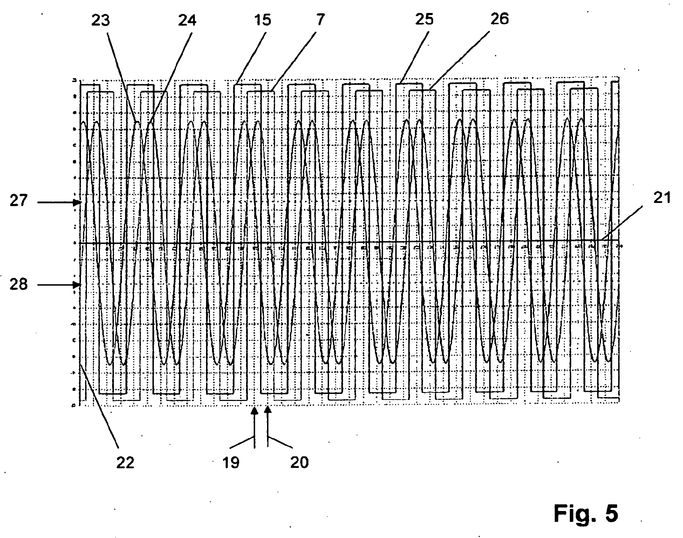

Der reale Verlauf der Schaltzustände in einem Ausführungsbeispiel eines erfindungsgemäßen Bedienelementes 1 ist in der Figur 5 wiedergegeben. Hierbei bezeichnet die Ordinate 22 wiederum den Drehwinkel von 0° bis 360° sowie in der Abzisse 23 der entsprechende Messwert 23, 24 für die ermittelte Feldlinienstärke der Permanentmagnete 16, 17. In den realen Verlauf der gemessenen Werte 23, 24 der Hall-Sensoren, der einem sinusförmigen Verlauf entspricht, sind die daraus resultierenden Schaltzustände 25, 26, wie sie in der Figur 4 dargestellt sind, überlagert dargestellt. Hierbei entspricht der Verlauf der Kurve 23 dem Schaltzustand 25 des Hall-Sensors 15 und der Verlauf der Kurve 24 dem Schaltzustand 26 des Hall-Sensors 7. Die beiden in dem Ausführungsbeispiel gemäß der Figur 4 beschriebenen Schaltzustände 25, 26 wurden in die Figur 5 ebenfalls eingetragen. Zu Erkennen ist, dass zur Erreichung einer Schaltschwelle ein gewisser Grenzwert 27, 28 überschritten bzw. unterschritten werden muß.

Die Hall-Sensoren 7, 15 werden direkt auf die vorhandene Leiterplatte 5 aufgebracht. Um die Toleranzen zu minimieren, wird die Leiterplatte 5 mittels Hilfszapfen zum Drehsteller 1 ausgerichtet. Weiterhin anzumerken bleibt, dass auch Hall-Sensoren 7, 15 einsetzbar sind, die vertikal auf der Leiterplatte 5 montiert sind und somit am Umfang der Verlängerung 3, 11 und entsprechenden Magneten 16, 17 gegenüberstehen.

## Patentansprüche

1. Bedienelement für ein Kraftfahrzeug, bestehend aus mindestens einem drehbar gelagerten Bedienknopf (2), einer an den Bedienknopf (2) angeformten Verlängerung (3, 11), einer im Bedienelement (1) gehaltenen Leiterplatte (5), einem zwischen Bedienknopf (2) und Leiterplatte (5) angeordneten Mittel (9, 10) zur Erzeugung einer Rast und einem elektrischen Mittel (7, 15, 16, 17) zur Erfassung der Drehbewegung (P) des Bedienknopfs (2), wobei das elektrische Mittel (7, 15, 16, 17) mit der Verlängerung (3, 11) des Bedienknopfs (2) zusammenwirkt und das elektrische Mittel (7, 15, 16, 17) aus mindestens zwei gegensinnig gepolten und verdrehfest mit der Verlängerung (3, 11) verbundenen Magneten (16, 17) und mindestens zwei stationär im Bedienelement (1) gehaltenen, die magnetischen Feldlinien der Magnete (16, 17) erfassenden Sensoren (7, 15) gebildet ist, **dadurch gekennzeichnet, dass** die Verlängerung (3, 11) eine hohlzylinderförmige Verlängerung (3, 11) ist, dass der Bedienknopf (2) in einer über der Leiterplatte (5) befestigen Aufnahme (4) gehalten ist, dass an die Aufnahme (4) und/oder an die Leiterplatte (5) mindestens ein Hilfszapfen angeformt oder befestigt ist, so dass die Leiterplatte (5) in Bezug auf die Aufnahme (4) und somit auf den Bedienknopf (2) ausrichtbar ist, dass der Bedienknopf (2) mittels eines Kugellagers (8) in der Aufnahme (4) drehbar gelagert ist, dass das Mittel (9, 10) zur Erzeugung einer Rast zwischen der Aufnahme (4) und dem Bedienknopf (2) vorhanden ist, und dass das Mittel (9, 10) zur Erzeugung einer Rast aus einer Rastkontur (9) und einer in die Rastkontur (9) eingreifenden Feder (10) gebildet ist.

2. Bedienelement nach Anspruch 1, **dadurch gekennzeichnet, dass** die Magnete (16, 17) über den Umfang, in regelmäßigen Abständen verteilt sind, und dass am unteren Ende der Verlängerung (3) ein Bereich (11) verdrehfest befestigt ist, in dem die Magnete (16, 17) enthalten sind.

3. Bedienelement nach einem der Ansprüche 1 und 2, **dadurch gekennzeichnet, dass** die Magnete (16, 17) einstückig an den Bedienknopf (2) angeformt sind.

4. Bedienelement nach einem der Ansprüche 1 bis 3, **dadurch gekennzeichnet, dass** die Sensoren (7, 15) Hall-Sensoren (7, 15) und die Hall-Sensoren (7, 15) auf der Leiterplatte (5) horizontal und/oder vertikal befestigt und elektrisch kontaktiert sind.

5. Bedienelement nach Anspruch 4, **dadurch gekennzeichnet, dass** die Hall-Sensoren (7, 15) derart auf der Leiterplatte (5) und in Bezug auf die Magnete (16, 17) ausgerichtet sind, dass nur je einer der Hall-Sensoren (7, 15) eine Änderung des Magnetfeldes (23, 24) erfährt.

## Claims

1. A control element for a motor vehicle, comprised of at least one rotatably mounted control knob (2), an extension (3, 11) formed on the control knob (2), a circuit board (5) retained in the control element (1), a means (9, 10) for generating a latching action disposed between the control knob (2) and the circuit board (5) and an electrical means (7, 15, 16, 17) for detecting the rotary movement (P) of the control knob (2), the electrical means (7, 15, 16, 17) cooperating with the extension (3, 11) of the control knob (2) and the electrical means (7, 15, 16, 17) being formed of at least two oppositely polarized magnets (16, 17) connected non-rotatably to the extension (3, 11) and by at least two sensors (7, 15) held stationary in the control element (1) and detecting the magnetic field lines of the magnets (16, 17), **characterized in that** the extension (3, 11) is a hollow-cylindrical extension (3, 11), that the control knob (2) is retained in an accommodating portion (4) attached above the circuit board (5), that at least one auxiliary pin is formed on or attached to the accommodating portion (4) and/or the circuit board (5), so that the circuit board (5) can be aligned with respect to the accommodating portion (4) and thus the control knob (2), that the control knob (2) is rotatably mounted in the accommodating portion (4) by means of a ball bearing (8), that the means (9, 10) for generating a latching action is provided between the accommodating portion (4) and the control knob (2), and that the means (9, 10) for generating a latching action is formed of a latching contour (9) and a spring (10) engaging into the latching contour (9).

2. The control element according to claim 1, **characterized in that** the magnets (16, 17) are distributed along the circumference at regular intervals, and that an area (11) in which the magnets (16, 17) are contained is non-rotatably attached to the lower end of extension (3).

3. The control element according to any one of the claims 1 and 2, **characterized in that** the magnets (16, 17) are formed integrally on the control knob (2).

4. The control element according to any one of the claims 1 to 3, **characterized in that** the sensors (7, 15) are Hall sensors (7, 15) and the Hall sensors (7, 15) are attached horizontally and/or vertically to the circuit board (5) and are electrically contacted.

5. The control element according to claim 4, **characterized in that** the Hall sensors (7, 15) are aligned in such a way on the circuit board (5) and relative to the magnets (16, 17) that only one of the Hall sensors (7, 15), respectively, experiences a change in the magnetic field (23, 24).

## Revendications

1. Elément de commande pour un véhicule automobile, se composant d'au moins un bouton de commande (2) logé à rotation, d'une rallonge (3, 11) formée de matière sur ledit bouton de commande (2), d'une carte de circuits imprimés (5) maintenue dans ledit élément de commande (1), d'un moyen (9, 10) disposé entre ledit bouton de commande (2) et ladite carte de circuits imprimés (5) et destiné à produire un encliquetage, et d'un moyen électrique (7, 15, 16, 17) destiné à détecter le mouvement de rotation (P) du bouton de commande (2), dans lequel ledit moyen électrique (7, 15, 16, 17) agit de concert avec la rallonge (3, 11) du bouton de commande (2) et le moyen électrique (7, 15, 16, 17) est formé par au moins deux aimants (16, 17) polarisés en sens opposé et reliés de manière solidaire en rotation à ladite rallonge (3, 11) ainsi que par au moins deux capteurs (7, 15) qui sont maintenus de manière stationnaire dans ledit élément de commande (1) et détectent les lignes de champs magnétiques des aimants (16, 17), **caractérisé par le fait que** ladite rallonge (3, 11) est une rallonge (3, 11) en forme de cylindre creux, que ledit bouton de commande (2) est maintenu dans un logement (4) fixé sur la carte de circuits imprimés (5), qu'au moins un tenon auxiliaire est formé de matière ou fixé sur ledit logement (4) et/ou sur la carte de circuits imprimés (5) de sorte que la carte de circuits imprimés (5) peut être alignée par rapport au logement (4) et ainsi par rapport au bouton de commande (2), que le bouton de commande (2) est logé à rotation par l'intermédiaire d'un roulement à billes (8) dans le logement (4), que le moyen (9, 10) destiné à produire un encliquetage est présent entre le logement (4) et le bouton de commande (2), et que le moyen (9, 10) destiné à produire un encliquetage est formé par un contour d'arrêt (9) et par un ressort (10) qui s'engage dans le contour d'arrêt (9).

2. Elément de commande selon la revendication 1, **caractérisé par le fait que** les aimants (16, 17) sont répartis à intervalles réguliers sur la circonférence et qu'une zone (11) dans laquelle les aimants (16, 17) sont contenus est fixée de manière solidaire en rotation sur l'extrémité inférieure de la rallonge (3).

3. Elément de commande selon l'une quelconque des revendications 1 et 2, **caractérisé par le fait que** les aimants (16, 17) sont moulés d'un seul tenant sur le bouton de commande (2).

4. Elément de commande selon l'une quelconque des revendications 1 à 3, **caractérisé par le fait que** les capteurs (7, 15) sont des capteurs à effet Hall (7, 15) et que les capteurs à effet Hall (7, 15) sont fixés de manière horizontale et/ou verticale et contactés électriquement sur la carte de circuits imprimés (5).

5. Elément de commande selon la revendication 4, **caractérisé par le fait que** les capteurs à effet Hall (7, 15) sont alignés sur la carte de circuits imprimés (5) et par rapport aux aimants (16, 17) de telle manière que seulement respectivement un parmi les capteurs à effet Hall (7, 15) connaît un changement du champ magnétique (23, 24).
